## Europäisches Patentamt
## European Patent Office
## Office européen des brevets

(19)

(11) Numéro de publication: **0 169 772**
**B1**

(12)
# FASCICULE DE BREVET EUROPÉEN

(45) Date de publication du fascicule du brevet:
03.02.88

(51) Int. Cl.⁴: **F 16 B 5/06**

(21) Numéro de dépôt: **85401398.4**

(22) Date de dépôt: **09.07.85**

(54) Agrafe pour l'assemblage de pièces, telles que des panneaux.

(30) Priorité: **16.07.84 FR 8411239**

(43) Date de publication de la demande:
**29.01.86 Bulletin 86/5**

(45) Mention de la délivrance du brevet:
**03.02.88 Bulletin 88/5**

(84) Etats contractants désignés:
**DE GB IT**

(56) Documents cité:
**WO-A-79/00335**
**DE-A-1 475 125**
**DE-A-2 804 848**
**FR-A-2 354 470**
**US-A-3 343 441**

(73) Titulaire: **AUTOMOBILES PEUGEOT, 75, avenue de la Grande Armée, F-75116 Paris (FR)**
Titulaire: **AUTOMOBILES CITROËN, 62 Boulevard Victor- Hugo, F-92200 Neuilly- sur- Seine (FR)**

(72) Inventeur: **Schaller, Jean- Pierre, 29 rue des Moulins, F-25550 Raynans (FR)**

(74) Mandataire: **Polus, Camille, c/o Cabinet Lavoix 2, Place d'Estienne d'Orves, F-75441 Paris Cedex 09 (FR)**

LIBER, STOCKHOLM 1988

## Description

La présente invention est relative aux agrafes pour l'assemblage et la fixation en aveugle de pièces superposées, telles que des panneaux, comportant des faces d'appui sensiblement planes percées d'ouvertures ayant une partie commune sensiblement carrée dans laquelle l'agrafe est destinée à s'engager et à fixer les pièces après rotation.

Les applications de telles agrafes peuvent être, par exemple, la fixation d'une grille de calandre sur l'ayant d'un véhicule; d'un déflecteur d'air sous un pare-chocs ou d'un panneau de garnissage sur une caisse.

Ces agrafes comprennent une tête agencée pour traverser cette partie commune des ouvertures suivant une diagonale et se raccordant par au moins un épaulement en saillie à un tronc de longueur correspondant à l'épaisseur des pièces à assembler, ce tronc s'épanouissant en un pied destiné à coopérer avec l'épaulement après rotation pour emprisonner entre eux les pièces à assembler. Le document DE-A-2 804 848 reflète un tel état de la technique.

On connait aussi deux autres variétés d'agrafes de ce type. Les premières présentent l'inconvénient de relâcher l'effort élastique de maintien après leur mise en place par fluage à froid ou déformation mécanique des parties de celles-ci qui solidarisent un assemblage. Dans la deuxième variété, qui permet un blocage positif, les agrafes sont d'une structure complexe et comportent plusieurs pièces, ce qui rend leur fabrication coûteuse et complique les opérations d'assemblage.

La présente invention vise donc à fournir une agrafe du type précité qui permette le maintien d'un assemblage par un blocage positif et qui soit constituée d'une pièce unique afin de réaliser un élément de fixation peu coûtaux, d'un montage simple et stable dans le temps en dépit des efforts subis par les pièces de l'assemblage.

A cet effet, l'invention a pour objet une agrafe du type précité, caractérisée en ce qu'elle comprend, au droit du tronc et parallèlement à lui, au moins un verrou, vanu de matière, apte à pénétrer, lors de la rotation de l'agrafe, dans une fente du tronc pour bloquer les deux branches de celui-ci, ménagées par cette fente, contre deux bords opposés de la partie commune des ouvertures par action sur au moins un des autres bords et réaliser ainsi un blocage positif.

Suivant d'autres caractéristiques de l'invention:

Chaque verrou venu de matière avec la tête se raccorde à cette dernière par une partie de section réduite qui s'épanouit en une embase en saillie sur une face de la tête.

Chaque verrou est articulé élastiquement par sa partie de section réduite à l'agrafe.

Chaque verrou s'étend sur l'essentiel de la longueur du tronc au droit de la fente et présente en regard de celle-ci une forme en coin apte à s'insérer entre les branches en les écartant.

D'autres caractéristiques et avantages de l'invention apparaîtront à la lecture de la description qui va suivre, d'une forme de réalisation de l'invention, donnée uniquement à titre d'exemple et faite en référence aux dessins annexés, sur lesquels;
- la Fig. 1 est une vue en perspective d'une agrafe en position d'introduction dans la partie commune des ouvertures de deux plaques superposées;
- la Fig. 2 est une vue en plan de la Fig. 1 en regardant la tête de l'agrafe:
- la Fig. 3 est une vue en coupe prise suivant la ligne T-T de la ligne 1, l'agrafe étant introduite dans l'ouverture;
- la Fig. 4 est une vue en coupe prise suivant la ligne T-T de la Fig.1, montrant l'agrafe en cours de verrouillage, légèrement tournée dans le sens des aiguilles d'une montre par rapport à la Fig.3; et
- la Fig. 5 est une vue en coupe suivant la ligne T-T de la Fig. 1, montrant l'agrafe verrouillée après l'avoir tournée de 45° dans le sens des aiguilles d'une montre par rapport à la Fig. 3.

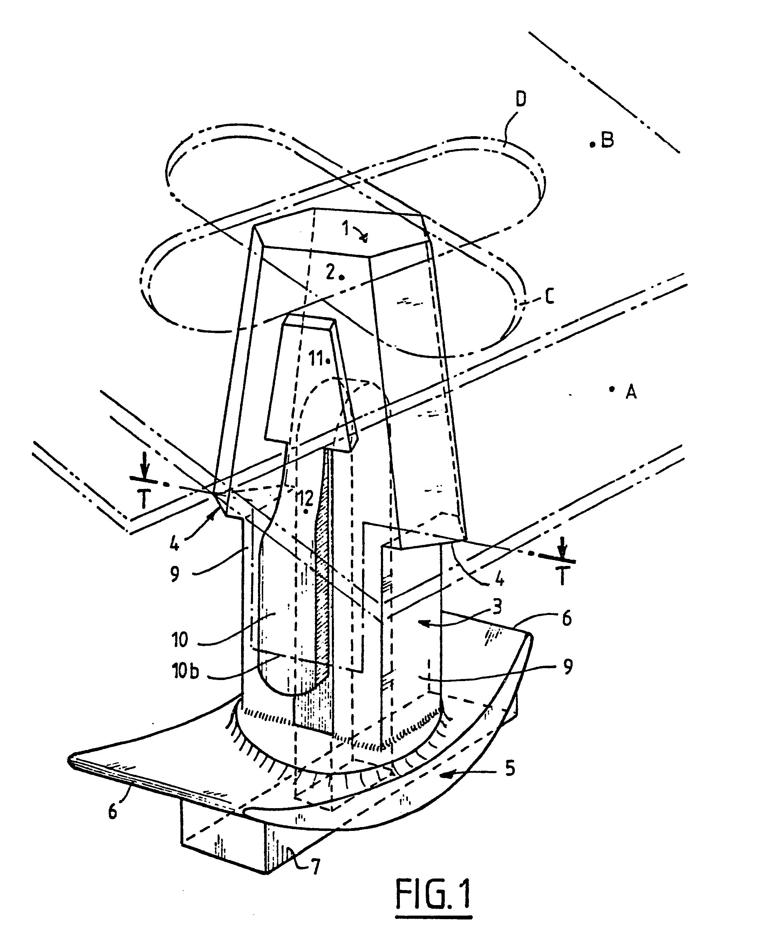

L'agrafe représentée aux figures 1 à 5 est destinée à l'assemblage et à la fixation en aveugle de pièces A, B superposées comportant des faces d'appui sensiblement planes percées d'ouvertures C, D ayant une partie commune sensiblement carrée abcd dans laquelle l'agrafe est destinée à s'engager. Cette agrafe est constituée en une seule pièce dans un matériau tel que, par exemple, une matière plastique comme un polyacétal.

Celle-ci comprend une tête 1 sous la forme d'un tronc de pyramide à base hexagonale dont une paire de faces 2 opposées, sensiblement plus larges que celles qui leurs sont adjacentes, sont parallèles entre elles. Les faces 2 de la tête 1 se prolongent pour former un tronc 3 parallélépipédique rectangulaire qui définit deux épaulements 4 triangulaires symétriques à la base de la tête 1.

Le tronc 3 s'épanouit en un pied 5 rectangulaire dont la largeur est parallèle aux faces 2 de la tête 1. Ce pied 5, incurvé longitudinalement, a une épaisseur qui décroît progressivement sur sa longueur de part et d'autre du milieu de celui-ci, où l'épaisseur est maximale. De chaque côté du tronc 3, les deux parties d'épaisseur décroissante du pied 5 constituent deux ailes 6 dont l'élasticité est inversement proportionnelle à leur épaisseur.

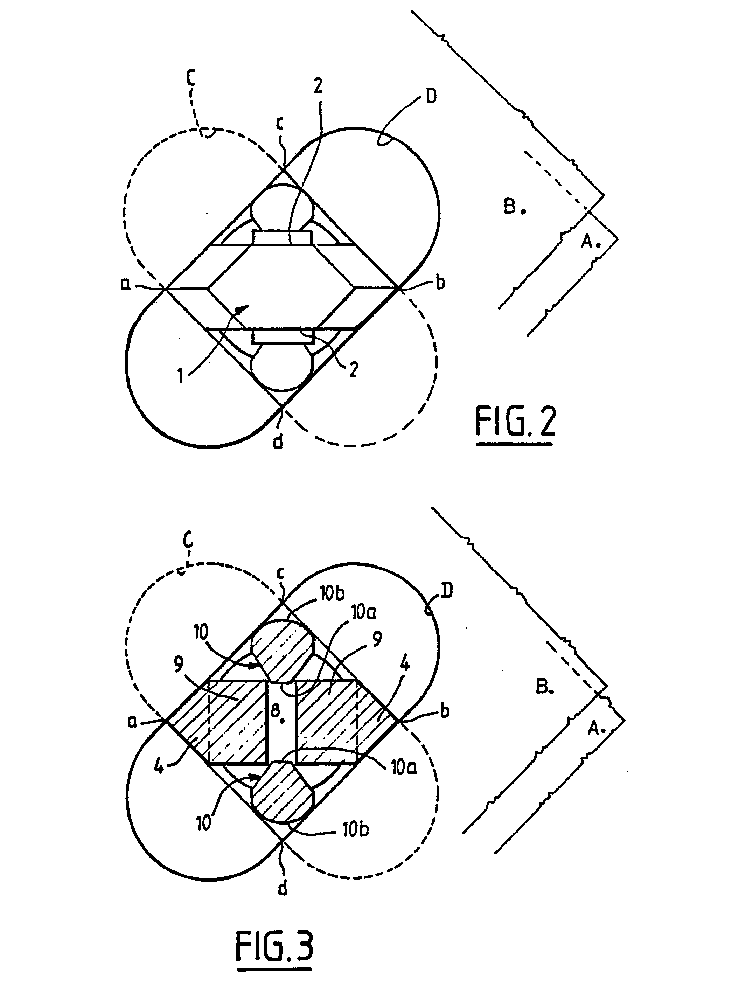

Les dimensions de la tête 1 et du tronc 3 de l'agrafe sont telles que la distance, séparant les extrémités en pointe des épaulements triangulaires 4, correspond à la longueur de la diagonale a-b de la partie commune abcd à peu près carrée des ouvertures C, D des pièces A, B superposées (Fig. 2) destinées à être assemblées, la longueur du tronc 3 correspondant sensiblement à l'épaisseur desdites pièces A, B assemblées.

La face convexe du pied 5 comporte une protubérance 7 de forme rectangulaire dont la longueur est parallèle à celle du pied 5 et qui est percée d'une ouverture rectangulaire se prolongeant partiellement dans la tête 1 pour former une fente 8 qui sépare le tronc 3 en deux branches 9 symétriques.

Le fait que la fente 8 traverse le pied 5, n'est pas lié en soi aux caractéristiques fonctionnelles de l'agrafe mais est simplement du à un procédé de moulage qui forme ladite fente 8 par la mise en place d'un noyau qui est ensuite extrait par le pied 5.

Au droit du tronc 3 et parallèlement à celui-ci, deux verrous 10 s'étendent, en regard de la fente 8 sur l'essentiel de la longueur du tronc 3. Ces verrous 10 présentent en section une forme sensiblement trapézoïdale dont la petite base 10<sup>a</sup> est d'une dimension inférieure à la fente 8 à laquelle elle fait face et dont la grande base 10<sup>b</sup> est arrondie, formant ainsi une sorte de coin apte à pénétrer dans la fente 8 entre les jambes 9 pour les écarter.

Ces verrous 10 viennent de matière avec l'agrafe à la tête 1 de laquelle ils se raccordent cchacun par une partie de section réduite 12 (Fig.1) s'épanouissant en une embase trapézoïdale 11 en saillie sur la face 2 de la tête 1. Chaque verrou 10 est ainsi articulé élastiquement par sa partie 12 à l'agrafe face à la fente 8, dans laquelle il peut ainsi pénétrer, ainsi qu'on le verra dans l'expose ci-dessous du fonctionnement de l'agrafe.

La mise en place de l'agrafe ainsi décrite s'opère de la façon suivante: la tête 1 de cette dernière est introduite dans la partie commune abcd des ouvertures C, D des pièces A, B en position d'assemblage (Fig. 2) de telle sorte que les épaulements 4 soient alignés sur la diagonale a, b de ladite partie commune abcd à peu près carrée. L'agrafe est alors enfoncée suivant cette orientation jusqu'à ce que les ailes 6 s'appliquent élastiquement contre la pièce A leur faisant face (Fig. 3), les verrous 10 prenant appui au voisinage de deux coins opposés c-d de ladite partie commune.

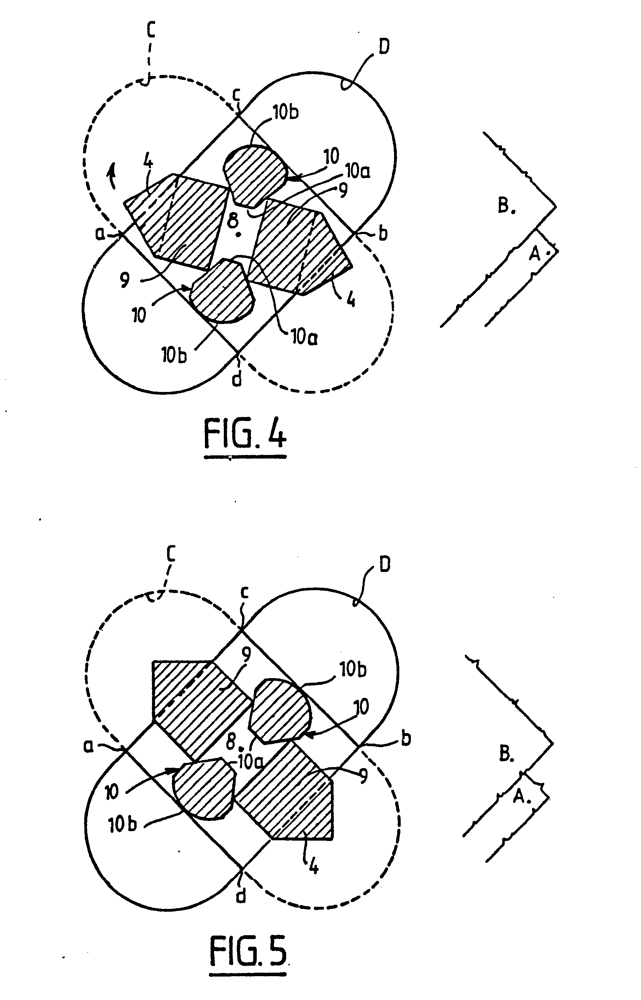

A ce stade, l'agrafe est tournée de 45° dans le sens des aiguilles d'une montre, en regardant le pied 5 de celle-ci, au moyen de la protubérance qui sert de prise (figures 4 et 5).

On amène ainsi les épaulements 4 à s'engager sur la pièce 9 en forçant les verrous 10, qui coopérent par leur grande base arrondie 10<sup>b</sup> avec les côtés a-d et b-c de la partie commune abcd, à pénétrer dans la fente 8. Ceci à pour effet d'écarter les branches 9 et de les appliquer contre les bords a-c et b-d (Fig. 5) de ladite partie commune abcd.

Le verrouillage par blocage positif ainsi effectué, procède d'un calage mutuel de quatre éléments (deux verrous 10 et deux branches 9) à section rigide rapprochés les une des autres à l'intérieur d'une enceinte indéformable qui est le carré abcd. Il en résulte une rigidité d'ancrage et une résistance très satisfaisante au cisaillement par rapport aux autres agrafes connues dont les sections ont une certaine élasticité. Par ailleurs, l'agrafe selon la présente invention permet non seulement un montage rapide et aisé, elle autorise aussi de part sa conception originale, son démontage. Enfin, par sa combinaison avec des ouvertures oblongues disposées perpendiculairement entre elles, l'agrafe permet le coulissement des pièces A et B l'une par rapport à l'autre, dans toute direction suivant le plan de leur face de contact, comme cela est nécessaire lorsque lesdites pièces A et B ont des coefficients de dilatation différents.

**Revendications**

1. Agrafe pour l'assemblage et la fixation en aveugle de pièces (A, B) superposées, telles que des panneaux, comportant des faces d'appui sensiblement planes percées d'ouvertures (C, D) ayant une partie commune (abcd) sensiblement carrée dans laquelle l'agrafe est destinée à s'engager et à fixer les pièces (A, B) après rotation, cette agrafe comprenant une tête (1) agencée pour traverser cette partie commune (abcd) des ouvertures (C, D) suivant une diagonale (a-b) et se raccordant par au moins un épaulement (4) en saillie à un tronc (3) de longueur correspondant sensiblement à l'épaisseur des pièces (A, B) à assembler, ce tronc (3) s'épanouissant en un pied (5) destiné à coopérer avec l'épaulement (4) après rotation pour emprisonner entre eux les pièces (A, B) à assembler, caracterisée en ce qu'elle comprend, au droit du tronc (3) et parallèlement à lui, au moins un verrou (10) venu de matière, apte à pénétrer, lors de la rotation de l'agrafe, dans une fente (8) du tronc (3) pour bloquer les deux branches (9) de celui-ci, ménagées par cette fente (8), contre deux bords (ac et bd) opposés de la partie commune (abcd) des ouvertures (C, D) par action sur au moins un des autres bords (ad et bc) et réaliser ainsi un blocage positif.

2. Agrafe suivant la revendication 1, caractérisée en ce que chaque verrou (10) venu de matière avec la tête (1) se raccorde à cette dernière par une partie de section réduite (12) qui s'épanouit en une embase (11) en saillie sur une face (2) de la tête (1).

3. Agrafe suivant la revendication 1 ou 2, caractérisée en ce que chaque verrou (10) est articulé élastiquement par sa partie de section réduite (12) à l'agrafe.

4. Agrafe suivant l'une quelconque des revendications précédentes, caractérisée en ce que chaque verrou (10) s'étend sur l'essentiel de la longueur du tronc (3) au droit de la fente (8) et présente en regard de celle-ci une forme en coin apte à s'insérer entre les branches (9) en les écartant.

5. Agrafe suivant la revendication 1, caractérisée en ce que le pied (5) est incurvé et a une épaisseur qui décroit progressivement de sa partie centrale en direction d'au moins un de ses bords droits.

6. Agrafe suivant l'une quelconque des revendications 1 et 2, caractérisée en ce que le tronc (3) parallélépipédique rectangulaire définit à la base de la tête (1) deux épaulements (4) triangulaires et symétriques.

7. Agrafe suivant la revendication 6, caractérisée en ce que la distance entre les extrémités en pointe des épaulements (4) correspond à la longueur de la diagonale (ab) de la partie commune (abcd) sensiblement carrée des ouvertures (C, D) percées dans les pièces (A, B) à assembler.

8. Agrafe suivant l'une quelconque des revendications 1 et 5, caractérisée en ce que le pied (5) est pourvu d'une protubérance (7) qui sert de prise pour la mise en place de l'agrafe.

**Patentansprüche**

1. Klammer zur Verbindung und Blindbefestigung von übereinanderliegenden Teilen (A, B), wie Platten, welche im wesentlichen ebene Anlageflächen aufweisen, die von Öffnungen (C, D) durchsetzt sind, welche einen im wesentlichen quadratischen gemeinsamen Abschnitt (abcd) haben, in welchen bzw. welchem die Klammer sich einpassen und die Teile (A, B) nach Drehung befestigen soll, wobei diese Klammer einen Kopf (1) aufweiet, welcher für ein Durchsetzen dieses gemeinsamen Abschnitts (abcd) der Öffnungen (C, D) länge einer Diagonale (a-b) eingerichtet ist, und sich mit wenigstens einer vorspringenden Schulter (4) an einen Schaft (3) anschließt, dessen Länge im wesentlichen der Dicke der zu verbindenden Teile (A, B) entspricht, wobei dieser Schaft (3) sich in einen Fuß (5) erweitert, der für ein Zusammenwirken mit der Schulter (4) nach Drehung für ein Einschließen der zu verbindenden Teile (A, B) bestimmt ist, dadurch gekennzeichnet, daß sie rechtswinklig zum Schaft (3) und parallel zu diesem einstückig wenigstens einen Riegel (10) umfaßt, welcher für ein Eindringen in einen Schlitz (8) des Schaftes (3) bei Drehung der Klammer zur Festlegung der beiden durch diesen Schlitz (8) entstandenen Schenkel (9) des Schaftes gegen zwei gegenüberliegende Ränder (ac und bd) des gemeinsamen Abschnitts (abcd) der Öffnungen (C, D) durch Einwirkung auf wenigstens einen der anderen Ränder (ad und bc) und so zur Realisierung einer sicheren Festlegung geeignet ist.

2. Klammer nach Anspruch 1, dadurch gekennzeichnet, daß jeder mit dem Kopf (1) einstückige Riegel (10) sich an jenen mit einem Abschnitt (12) verminderten Querschnitts anschließt, welcher sich in einen über eine Seite (2) des Kopfes (1) vorspringenden Ansatz (11) erweitert.

3. Klammer nach Anspruch 1 oder 2, dadurch gekennzeichnet, daß jeder Riegel (10) mit seinem Abschnitt (12) verminderten Querschnitts an der Klammer elastisch angelenkt ist.

4. Klammer nach irgendeinem der vorstehenden Ansprüche, dadurch gekennzeichnet, daß jeder Riegel (10) sich im wesentlichen über die Länge des Schaftes (3) rechtswinklig zum Schlitz (8) erstreckt und diesem gegenüberstehend Eckform aufweist, die für ein Eindringen zwischen die Schenkel (9) diese aufspreitzend geeignet ist.

5. Klammer nach Anspruch 1, dadurch gekennzeichnet, daß der Fuß (5) gekrümmt ist und eine Dicke aufweist, welche von seinem Mittelteil in Richtung zu wenigstens einem seiner Ränder fortschreitend abnimmt.

6. Klammer nach irgendeinem der Ansprüche 1 und 2, dadurch gekennzeichnet, daß der parallelepipedische rechteckige Schaft (3) an der Basis des Kopfes (1) zwei dreieckige und symmetrische Schultern (4) bestimmt.

7. Klammer nach Anspruch 6, dadurch gekennzeichnet, daß der Abstand zwischen den spitzen Enden der Schultern (4) der Länge der Diagonale (ab) des im wesentlichen quadratischen gemeinsamen Abschnitts (abcd) der in den zu verbindenen Teilen (A, B) ausgenommenen Öffnungen (C, D) entspricht.

8. Klammer nach irgendeinem der Ansprüche 1 bis 5, dadurch gekennzeichnet, daß der Fuß (5) mit einem Vorsprung (7) versehen ist, welcher als Griff zur Anbringung der Klammer dient.

**Claims**

1. A fastener for the blind assembly and fixing of superimposed elements (A, B), such as panels, which have substantially flat supporting faces perforated with openings (C, D), which have a substantially square-shaped common part (a, b, c, d), in which the fastener is intended to be engaged and to fix the elements (A, B), after rotation, this fastener comprising a head (1) adapted to traverse this common part (a, b, c, d) of the openings (C, D) on a diagonal (a-b) and being connected by at least one projecting shoulder (4) to a stem (3) having a length corresponding substantially to the thickness of the elements (A, B) to be assembled, this stem (3) opening into a foot (5) intended to cooperate with the shoulder (4) after rotation so as to trap between them the elements (A, B) to be assembled, characterised in that it comprises, alongside the stem (3) and parallel thereto, at least one lock means (10) which is produced in one piece of material and is capable of penetrating, during rotation of the fastener, a slot (8) in the stem (3) so as to lock the two branches (9) thereof which are made by this slot (8), against two opposed edges (ac and bd) of the common part (a, b, c, d) of the openings (C, D) by action on at least one of the other edges (ad and bc) and thereby achieve positive locking.

2. A fastener according to claim 1, characterised in that each lock means (10) produced in one piece with the head (1) is connected to said head by a portion of reduced cross section (12) which opens into a base (11) projecting from one face (2) of the head (1).

3. A fastener according to claim 1 or 2, characterised in that each lock means (10) is elastically articulated by its portion of reduced cross section (12) to the fastener.

4. A fastener according to any one of the preceding claims, characterised in that each lock means (10) extends over the majority of the length of the stem (3) alongside the slot (8) and has, opposite the slot (8), a wedge shape capable of being inserted between the branches (9) and spreading them apart.

5. A fastener according to claim 1, characterised in that the foot (5) is incurvate and has a thickness which decreases gradually from its central portion in the direction of at least one of its straight edges.

6. A fastener according to any one of claims 1 and 2, characterised in that the rectangular parallelepiped stem (3) defines two triangular and symmetrical shoulders (4) at the base of the head (1).

7. A fastener according to claim 6, characterised in that the distance between the pointed ends of the shoulders (4) corresponds to the length of the diagonal (ab) of the substantially square common part (a, b, c, d) of the openings (C, D) perforated in the elements (A, B) to be assembled.

8. A fastener according to any one of claims 1 and 5, characterised in that the foot (5) is provided with a projection (7) which acts as gripping means for positioning the fastener.

<u>FIG.1</u>

FIG.2

FIG.3

3

FIG. 4

FIG. 5

5